**Europäisches Patentamt**

**European Patent Office**

**Office européen des brevets**

(19)

(11) Numéro de publication: **0 012 064**
**B1**

(12) **FASCICULE DE BREVET EUROPEEN**

(45) Date de publication du fascicule du brevet: **29.06.83**

(21) Numéro de dépôt: **79400889.6**

(22) Date de dépôt: **20.11.79**

(51) Int. Cl.³: **G 05 B 9/02,** G 06 G 7/66,
G 09 B 9/08

(54) Dispositif électronique de surveillance de fonctionnement de servovérin hydraulique.

(30) Priorité: **22.11.78 FR 7832904**

(43) Date de publication de la demande:
**11.06.80 Bulletin 80/12**

(45) Mention de la délivrance du brevet:
**29.06.83 Bulletin 83/26**

(84) Etats contractants désignés:
**BE DE GB IT**

(56) Documents cités:
**DE - A - 2 431 912**
**FR - A - 2 396 344**
**US - A - 3 263 572**
**US - A - 4 089 494**

**ISA TRANSACTIONS, vol. 2, no. 3, Juillet 1963,**
**pages 207—215 New York, U.S.A. E. POLAK:**
**"Exploratory Design of a Hydraulic Position**
**Servo"**

(73) Titulaire: **THOMSON-CSF**
**173, Boulevard Haussmann**
**F-75379 Paris Cedex 08 (FR)**

(72) Inventeur: **Lacroix, Michel André Bernard Le**
**Materiel**
**Telephonique THOMSON-CSF 46 Quai Alphonse**
**Le Gallo**
**F-92103 Boulogne Billancourt Cedex (FR)**

(74) Mandataire: **Thrierr, Françoise et al,**
**THOMSON-CSF SCPI 173, Bld Haussmann**
**F-75379 Paris Cedex 08 (FR)**

Courier Press, Leamington Spa, England.

Dispositif electronique de surveillance de fonctionnement de plusieurs
servoverins hydrauliques independants les uns des autres

La présente invention se rapporte à un dispositif électronique de surveillance de fonctionnement de plusieurs servovérins hydrauliques indépendants les uns des autres, en particulier pour simultateurs d'entraînement au pilotage des avions.

Les simulateurs d'entraînement au pilotage des avions ont pour rôle de restituer à l'élève-pilote, aussi fidèlement que possible, les conditions d'environnement d'une cabine de pilotage réelle. En particulier, afin que l'élève éprouve les sensations physiques correspondant aux mouvements de l'avion, la cabine simulée est placée sur une plate-forme mobile. Cette plate-forme est soumise à des accélérations en rotation et en translation qui lui sont transmises par un agencement de vérins hydrauliques asservis dont la structure dépend du degré de fidélité avec laquelle les mouvements de l'avion doivent être reproduits.

Dans un agencement connu de simulateur, la cabine simulée est placée sur une plate-forme supportée par un dispositif de six vérins placé sur une base et dans lequel les vérins occupent sensiblement les arêtes d'un octaèdre. Les allongements et les raccourcissements respectifs des vérins sont commandés par un calculateur et déterminent de manière relativement compliquée les accélérations cherchées pour la plate-forme. Chaque vérin et les circuits électriques et hydrauliques d'asservissement qui lui sont associés forment un ensemble qui est désigné dans la suite du texte sous le terme de servovérin.

La fidélité des accélérations obtenues repose sur un fonctionnement correct des servovérins. Une dégradation des performances est souvent difficile à déterminer de manière qualitative par la simple observation du mouvement des vérins et par l'interprétation des sensations plus ou moins subjectives éprouvées par un occupant de la cabine. En particulier, le servovérin défaillant peut être relativement difficile à identifier. La sécurité repose aussi sur un fonctionnement correct des vérins. Afin de garantir la qualité des mouvements obtenus, de faciliter la maintenance et de contribuer à la sécurité, il apparaît nécessaire de contrôler, de manière indépendante et précise, le fonctionnement de chacun des servovérins. La dégradation des caractéristiques de fonctionnement provient principalement, soit d'un encrassement d'une servovalve ou d'un point dur dans la manoeuvre d'un tiroir de celle-ci, soit d'une défaillance d'un capteur de déplacement.

On connait d'après le document US—A— 3 263 572 un dispositif permettant d'améliorer la fiabilité d'un mécanisme à vérin hydraulique, mais ce brevet n'envisage que la commande redondante par deux vérins identiques d'un seul organe de sortie: s'il y a une différence entre les mouvements des deux vérins, seul celui qui est le plus ressemblant au modèle reste en fonctionnement, tandis que l'autre est bloqué. La solution proposée par ce brevet US ne peut donc servir à surveiller les mouvements de plusieurs vérins indépendants les uns des autres. En outre, ce brevet US ne prévoit pas de surveiller les circuits d'asservissement du vérin.

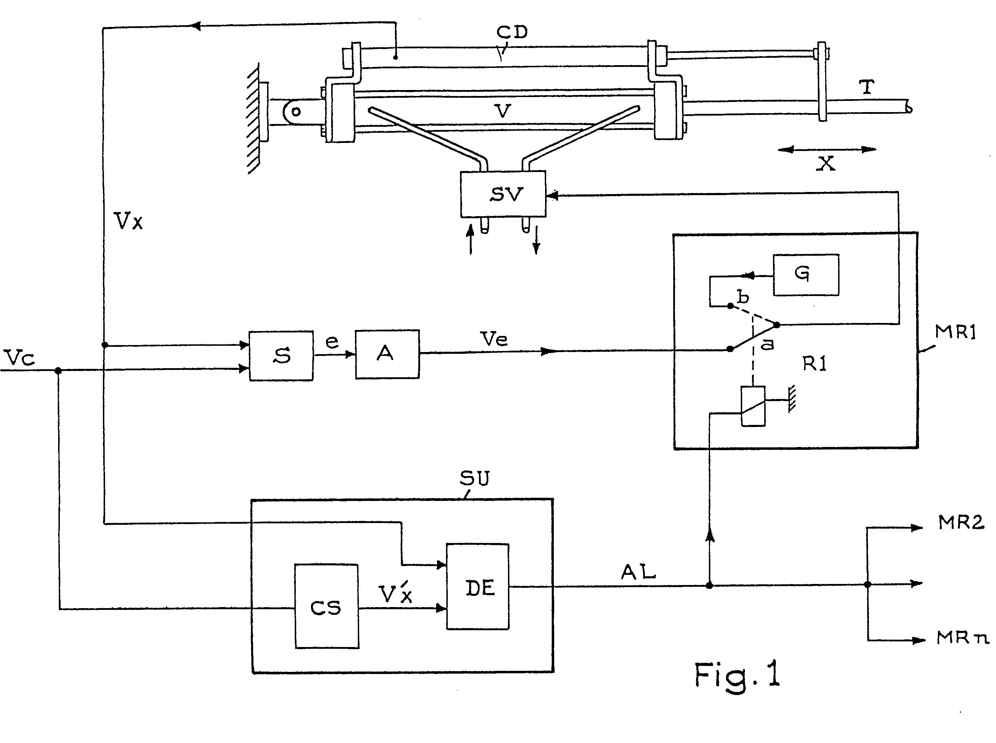

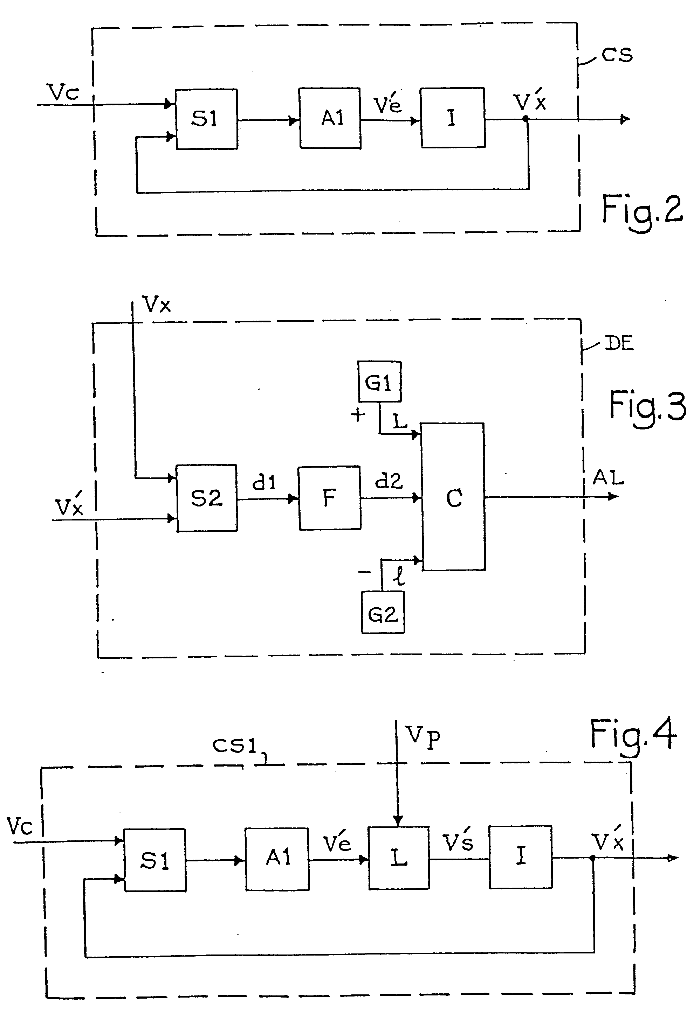

Le document DE—A—2 431 912 décrit, en référence à la figure 1, le schéma équivalent d'un vérin électrohydraulique, et, en référence à la figure 2, un dispositif de surveillance de ce vérin. Il n'est pas du tout question dans ce brevet de surveiller plusieurs vérins commandés indépendamment les uns des autres. Il n'y est question que d'une commande redondante de ce vérin (page 5, trois dernières lignes). Le dispositif de surveillance de ce vérin n'est relié à aucun capteur de déplacement et ne reçoit que des courants de commande et des courants de contre-réaction.

L'article de E. POLAK dans "ISA Transactions" de juillet 1963 décrit des circuits de simulation d'un vérin électrohydraulique, mais il n'y est absolument pas question de surveiller plusieurs vérins indépendants, ni de déclencher un quelconque dispositif de sécurité.

La présente invention a pour objet un dispositif électronique de surveillance de plusieurs vérins indépendants, permettant de contrôler à l'aide d'un circuit de simulation en permanence le fonctionnement de chaque servovérin auquel il est associé, et de fournir un signal permettant l'identification de ce servovérin et éventuellement le déclenchement de la procédure de retour en position basse de la plate-forme, lorsque le fonctionnement ne satisfait pas aux tolérances admissibles. Le but de l'invention est de tenir compte au cours de cette simulation de la saturation en vitesse du servo-verin en fonction de l'effort qu'il fournit.

Le dispositif électronique de surveillance de plusieurs vérins indépendants conforme à l'invention comprend pour chaque vérin un circuit de simulation qui reçoit le signal de commande du servovérin et qui fournit un signal de consigne représentant le déplacement théorique de la tige de vérin correspondant au déplacement commandé et aux caractéristiques du servovérin utilisé, un détecteur d'erreur qui reçoit le signal de consigne ainsi qu'un signal représentant le déplacement réel de la tige de vérin et qui fournit un signal d'alarme lorsque la différence entre les deux signaux reçus n'est pas comprise entre les limites admissibles, le circuit de simulation comportant plusieurs éléments formés par des amplificateurs opérationnels à fonctions de transfert respectivement analogues à celles du soustracteur faisant partie de la boucle d'asservissement en position du vérin, de l'amplificateur disposé en aval de ce soustracteur, et du vérin asservi en position, la fonction de transfer de ce vérin étant assimilée à une fonction du transfert du premier ordre, deux capteurs de pression mesurant les pressions des deux chambres du vérin et étant associés à deux amplificateurs différentiels reliés à un circuit fournissant un signal proportionnel à l'effort fourni par le vérin, et il est caractérisé par le fait que le circuit de simulation comporte un circuit limiteur disposé entre lesdits amplificateurs opérationnels à fonctions de transfert analogues à celles du soustracteur et du vérin, ce circuit limiteur étant relié audit circuit fournissant un signal proportionnel à l'effort fourni par le vérin, ce circuit limiteur simulant ainsi la saturation en vitesse du servovérin en fonction de l'effort qu'il fournit.

Selon un mode de réalisation préféré de l'invention, le circuit limiteur comprend un pont à diodes alimenté, en deux sommets opposés, par les tensions fournies par des générateurs de tension reliés audit circuit fournissant un signal proportionnel à l'effort fourni par le vérin. De façon avantageuse, chacun des générateurs est formé par un amplificateur opérationnel fournissant une tension variant suivant une loi linéaire représentant, par approximation dans la zone de fonctionnement du servovérin, la loi de saturation de ce servovérin en vitesse.

D'autres caractéristiques du dispositif électronique de surveillance selon l'invention apparaîtront à la lecture de la description détaillée d'un mode de réalisation pris comme exemple non limitatif et illustré par le dessin annexé sur lequel:

— la figure 1 est un schéma de l'ensemble formé par un dispositif de surveillance associé à un servovérin classique;
— la figure 2 est un schéma d'un circuit simulateur de servovérin;
— la figure 3 est un schéma d'un circuit détecteur d'erreur;
— la figure 4 est le schéma d'une variante d'un circuit simulateur de servovérin;
— la figure 5 est un schéma d'ensemble du dispositif de surveillance selon l'invention associé à un servovérin classique et possédant une boucle de stabilisation en fonction de l'effort développé par le vérin et simulent le saturation en vitesse;
— la figure 6 est le schéma détaillé de la variante d'un circuit limiteur, et
— la figure 7 représente un graphique tracé sur les courbes classiques de saturation en vitesse d'un servovérin et qui permet de comprendre le fonctionnement du circuit limiteur.

Le servovérin représenté sur la figure 1, et choisi à titre d'exemple connu, constitue un asservissement de position du type le plus simple. Il est commandé par un signal de commande en position Vc dont l'amplitude est proportionnelle à la course X à imposer à la tige T du vérin V. Celui-ci est commandé hydrauliquement par une servovalve SV à laquelle est appliqué un signal d'erreur amplifié Ve. Le déplacement X est transmis mécaniquement à un capteur de déplacement CD qui fournit un signal Vx proportionnel à ce déplacement. Un circuit S reçoit les signaux Vx et Vc et fournit un signal d'erreur e dont l'amplitude est égale à la différence des amplitudes respectives de ces deux signaux. L'amplificateur A amplifie le signal d'erreur e et fournit le signal d'erreur amplifié Ve. Celui-ci est appliqué à la servovalve SV par l'intermédiaire d'un dispositif MR1 de mise au repos et de rétraction du vérin. Ce dispositif classique est formé, par exemple, par un relais R1 à deux positions a et b et par un générateur de tension G. Lorsque le vérin V est en fonctionnement, la lame ou contact mobile du relais R1 est en position a. La servovalve SV est alors alimentée par le signal Ve. Lorsque la plate-forme P doit être mise en position de repos, c'est-à-dire en position basse, la lame du relais R1 est placée en position b. La servovalve SV est alors alimentée par le signal continu fourni par le générateur G. La polarité de ce signal correspond à une rétraction de la tige de vérin T. Le schéma du servovérin décrit concerne, par exemple, un petit vérin suffisamment amorti. Il va de soi que, dans le cas d'un grand vérin à palier hydrostatique, ce servovérin devrait être complété par des systèmes classiques de stabilisation. Le dispositif de mise au repos MR1 est commandé habituellement par un signal fourni par des circuits de sécurité de l'ensemble d'entraînement au pilotage. Sur la figure 1, ce dispositif de mise au repos est avantageusement commandé par le signal d'alarme AL fourni par un dispositif de surveillance SU, selon l'invention.

Ce dispositif de surveillance SU est formé par un circuit de simulation CS et par un circuit détecteur d'erreur DE. Le circuit de simulation CS reçoit le signal Vc et fournit le signal de consigne V'x qui représente le déplacement théorique de la tige de vérin. Le signal V'x est simulé à partir du signal Vc et des caractéristiques de fonctionnement théoriques principales du servovérin. Le circuit détecteur d'erreur DE reçoit le signal V'x ainsi que le signal Vx et fournit le signal d'alarme AL. Dans l'exemple décrit, ce signal est appliqué au dispositif de mise au repos MR1 du vérin V ainsi qu'aux dispositifs MR2 ... MRn correspondant aux autres vérins du simulateur d'entraînement. Le signal d'alarme est constitué, en fonctionnement normal du servovérin, par une tension qui maintient la lame de chacun des relais R1 ... Rn des différents dispositifs MR1 à MRn en position a. Cette tension est supprimée lorsque la différence d'amplitude entre les signaux Vx et V'x dépasse des limites admissibles, ce qui place la lame desdits relais en position b.

Le schéma détaillé du circuit de simulation CS est représenté sur la figure 2. Ce circuit de simulation est un modèle électronique déterminé en assimilant la fonction de transfert du servovérin asservi en position à une fonction de transfert du premier ordre. Il comprend des éléments S1, A1 et I, à fonctions de transfert respectivement analogues à celles: du circuit S, de l'amplificateur A et du vérin V. Tous ces éléments sont formés par des amplificateurs opérationnels intégrés classiques. Le circuit I est un circuit intégrateur dont la constante de temps est pratiquement identique à celle du vérin V.

Le schéma du circuit détecteur d'erreur DE est représenté sur la figure 3. Un circuit S2 reçoit les signaux Vx et V'x et fournit un signal d1 dont l'amplitude est égale à la différence des amplitudes de ces deux signaux. Un filtre passe-bas F reçoit le signal d1 et fournit un signal d2. Il permet de s'affranchir de la différence entre la fonction de transfert simulée du premier ordre et la fonction de transfert réelle, aux fréquences proches de la fréquence de résonance du système pour laquelle cette différence est importante. Un circuit comparateur C reçoit le signal d2 ainsi que deux tensions L et I fournies respectivement par deux générateurs G1 et G2 et correspondant aux limites positive et négative que l'amplitude du signal d2 ne doit pas dépasser pour que le fonctionnement soit considéré comme correct. Le circuit comparateur C fournit le signal d'alarme AL qui correspond à la présence d'une tension lorsque l'amplitude du signal est comprise entre les limites L et I et à l'absence de cette tension lorsque l'amplitude dépasse l'une ou l'autre de ces limites. Le circuit S2 est obtenu à partir d'un amplificateur opérationnel intégré. Le circuit C peut être acheté dans le commerce. Les deux générateurs G1 et G2 peuvent être formés par de simples ponts de résistances. Le filtre passe-bas F est un filtre actif formé également à partir d'un amplificateur opérationnel.

Le dispositif de surveillance décrit ne répond parfaitement à la tâche qui lui est demandée que si l'on n'atteint jamais la vitesse maximum des vérins. Néanmoins, en utilisation normale, il est possible que pendant certains laps de temps le servovérin atteigne son régime de saturation en vitesse. Bien que ce phénomène ne corresponde à aucune défaillance du servovérin et tienne simplement, par exemple, à un mode de commande particulier, les signaux Vx et V'x diffèrent immédiatement, ce qui entraîne l'émission du signal d'alarme et l'arrêt intempestif du fonctionnement.

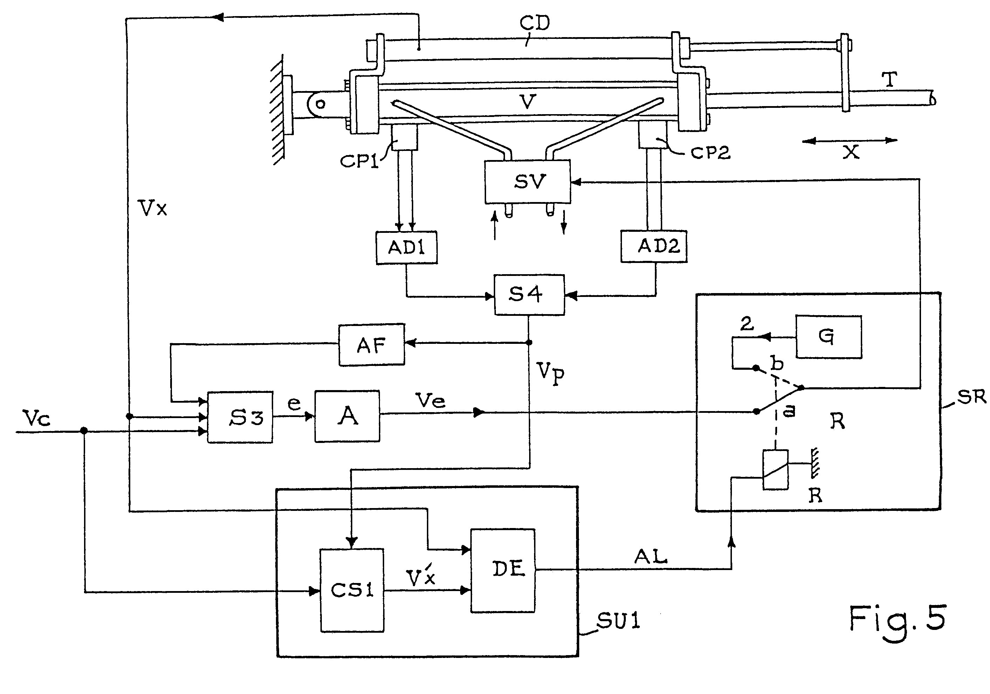

Un dispositif de surveillance selon l'invention, représenté sur la figure 5, est adapté au phénomène éventuel de saturation du servovérin et évite le déclenchement des systèmes de mise au repos. Ce dispositif est associé à un servovérin possédant une boucle de stabilisation classique en fonction de l'effort F développé par le vérin. Deux capteurs de pression, à jauges de contrainte, CP1 et CP2, associés à deux amplificateurs différentiels AD1 et AD2, mesurent les pressions des deux chambres du vérin. Les deux signaux obtenus sont appliqués à un circuit S4 qui fournit un signal Vp proportionnel à l'effort F. Ce signal convenablement traité et amplifié dans un circuit AF, est appliqué, en contreréaction, au circuit S3. La présence de ce dispositif de stabilisation à partir de l'effort F est mise à profit pour perfectionner le dispositif de surveillance du vérin selon l'invention, en simulant l'effet de saturation de la servovalve en fonction de la charge. La variante perfectionnée du dispositif de surveillance SU1 comprend un détecteur d'erreur DE identique à celui du dispositif SU déjà décrit ainsi qu'un circuit de simulation CS1 qui reçoit le signal Vp.

Le schéma du circuit CS1 est représenté sur la figure 4. Le circuit de simulation CS1 est, comme le circuit de simulation CS un modèle électronique du servovérin, dont la fonction de transfert a été assimilée à une fonction de transfert du premier ordre mais qui est complété entre l'amplificateur A1 et l'intégrateur I, par un circuit limiteur L. Ce circuit limiteur reçoit le signal V'e fourni par l'amplificateur A1 ainsi que le signal Vp fourni par le circuit S4. Il fournit à l'intégrateur I un signal V's.

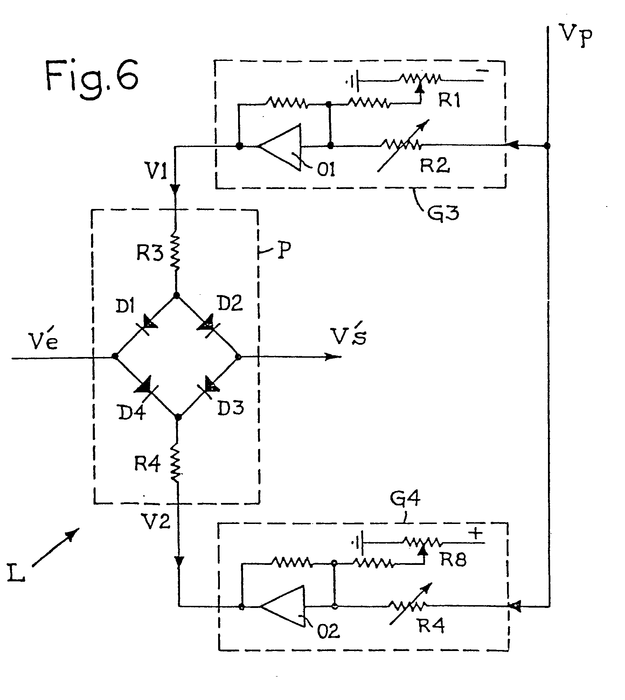

Le schéma détaillé du limiteur L est représenté sur la figure 6. Les diodes D1, D2, D3 et D4 d'un pont écrêteur P classique sont polarisées, en courant, par deux générateurs de tension G3 et G4 connectés à deux sommets opposés du pont par l'intermédiaire de deux résistances R3 et R4. Sur l'un des deux autres sommets du pont P est appliqué le signal V'e tandis que sur l'autre sommet du pont P est prélevé le signal de sortie V's fourni à l'intégrateur I. Les tensions V1 et V2 fournies par les générateurs G3 et G4 définissent respectivement les limites d'écrêtage du signal V's correspondant à la saturation en vitesse du servovérin lors de la sortie et lors de la rentrée de la tige T de vérin.

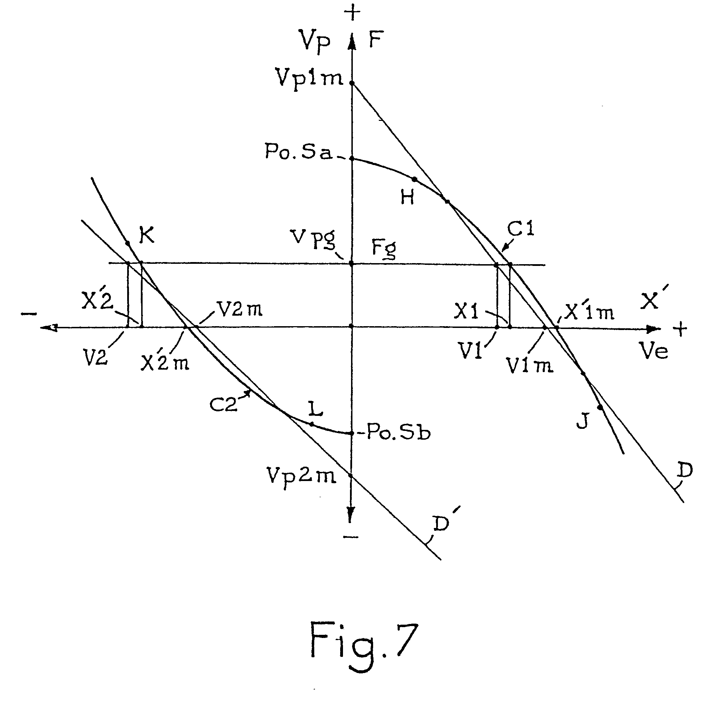

Le graphique de la figure 7 permet de comprendre comment le fonctionnement électrique du limiteur peut simuler, de façon suffisamment approchée, le fonctionnement hydraulique du servovérin. Les deux courbes C1 et C2 représentent en fonction de l'effort F développé par le vérin, la vitesse limite X' acquise par la tige de vérin. La courbe C1 correspond à la sortie de cette tige tandis que la courbe C2 correspond à sa rentrée. Les équations de ces courbes sont respectivement:

$$F = Po \cdot Sa - Pn(Sa^3 + Sb^3) X'^2 \cdot 1/2 \, Qn^2$$
$$-F = Po \cdot Sb - Pn(Sa^3 + Sb^3) X'^2 \cdot 1/2 \, Qn^2$$

Dans ces équations:

Po représente la pression du liquide hydraulique, Sa et Sb représentent les surfaces utiles du piston dissymétrique, Pn et Qn, la pression nominale et le débit nominal de la servovalve indiqués par le constructeur. A une charge extérieure appliquée à ce vérin correspond, par exemple, un effort Fg et deux vitesses maximales: une vitesse de sortie X'1 et une vitesse de rentrée X'2. Lorsque l'effort Fg atteint les valeurs Po . Sa ou Po . Sb la vitesse X' est nulle. Lorsque cet effort est nul les vitesses ne peuvent excéder les valeurs X'1m et X'2m. En correspondance avec la vitesse X' et l'effort F, ont été portées sur les axes, l'amplitude du signal Vp et celle du signal Ve de commande de la servovalve. En exploitation, l'effort Fg varie à l'intérieur des zones utiles HJ et KL des courbes C1 et C2. Afin de simuler le fonctionnement hydraulique du servovérin et plus particulièrement la saturation en vitesse de celui-ci, au moyen du circuit limiteur L, ces portions de courbes sont assimilées, par approximation, à des segments de droite aux équations desquelles sont rendues identiques les équations de fonctionnement du circuit limiteur. Les équations de fonctionnement du circuit limiteur sont représentées par les droites D et D' dont les pentes sont définies par deux coefficients k1 et k2. Ces droites sont définies respectivement par les points à vitesse nulle et d'efforts Vp1m et Vp2m et par les points à effort nul et de vitesses V1m et V2m. Les valeurs correspondantes peuvent être mesurées graphiquement. Si, à l'effort Fg correspond une vitesse X'1 ou une vitesse X'2, au signal Vpg correspondent les tensions V1 et V2 qui déterminent les niveaux de limitation du signal V's en sortie du circuit limiteur.

Ces deux valeurs sont données par les équations:

$$V1 = V1m - k1\, Vp$$
$$V2 = V2m + k2\, Vp$$

qui sont aussi les équations donnant les valuers des tensions fournies par les générateurs G3 et G4 en fonction du signal Vp. Chacun de ces générateurs est formé par un amplificateur opérationnel, utilisé de manière classique, dont la tension d'entrée est déterminée par deux dispositifs de réglage. Les dispositifs de réglage R1 et R3 sont ajustés de manière que V1 et V2 soient respectivement égales à V1m et V2m lorsque Vp est nul. Le dispositif de réglage R2 est ajusté de manière que V1 soit égale à zéro lorsque Vp est égal à Vp1m. Le dispositif de réglage R4 est ajusté de manière que V1 soit égale à zéro lorsque Vp est égal à Vp2m. En assimilant les courbes C1 et C2 aux droites D et D' judicieusement placées par rapport à celles-ci, la vitesse X' à laquelle la saturation est simulée par une limitation d'amplitude du signal V's diffère au maximum de ±10% de la vitesse à laquelle se produit réellement la saturation.

## Revendications

1. Dispositif électronique de surveillance de fonctionnement de plusieurs servovérins hydrauliques indépendants les uns des autres comprenant pour chaque servovérin un circuit de simulation (CS1) qui reçoit le signal de commande (Vc) du servovérin et qui fournit un signal de consigne (V'x) représentant le déplacement théorique de la tige de vérin correspondant au déplacement commandé et aux caractéristiques du servovérin utilisé, un détecteur d'erreur (DE) qui reçoit le signal de consigne ainsi qu'un signal (Vx) représentant le déplacement réel de la tige de vérin et qui fournit un signal d'alarme (AL) lorsque la différence entre les deux signaux reçus n'est pas comprise entre des limites admissibles, le circuit de simulation comportant plusieurs éléments (S1, A1, I), formés par des amplificateurs opérationnels à fonctions de transfert respectivement analogues à celles du soustracteur (S) faisant partie de la boucle d'asservissement en position du vérin, de l'amplificateur (A) disposé en aval de ce soustracteur, et du vérin (V) asservi en position, la fonction de transfert de ce vérin étant assimilée à une fonction du transfert du premier ordre, deux capteurs de pression (CP1, CP2) mesurant les pressions des deux chambres du vérin et étant associés à deux amplificateurs différentiels (AD1, AD2) reliés à un circuit (S4) fournissant un signal (Vp) proportionnel à l'effort fourni par le vérin, caractérisé par le fait que le circuit de simulation comporte un circuit limiteur (L) disposé entre lesdits amplificateurs opérationnels à fonctions de transfert analogues à celles du soustracteur et du vérin, ce circuit limiteur étant relié audit circuit (S4) fournissant un signal proportionnel à l'effort fourni par le vérin, ce circuit limiteur simulant ainsi la saturation en vitesse du servovérin en fonction de l'effort qu'il fournit.

2. Dispositif selon la revendication 1, caractérisé par le fait que le circuit limiteur comprend un pont à diodes (D1 à D4) alimenté, en deux sommets opposés, par les tensions fournies par des générateurs de tension (G3, G4) reliés audit circuit (S4) fournissant un signal proportionnel à l'effort fourni par le vérin.

3. Dispositif selon la revendication 2, caractérisé par le fait que chacun des générateurs est formé par un amplificateur opérationnel fournissant une tension variant suivant une loi linéaire représentant, par approximation dans la zone de fonctionnement du servovérin, la loi de saturation de ce servovérin en vitesse.

## Patentansprüche

1. Elektronische Überwachungsvorrichtung zur Überwachung der Funktion von mehreren voneinander unabhängigen, servogeregelten Hydraulikzylindern, mit einer Simulierschaltung (CS1) für jeden Servozylinder, die das Steuersignal (Vc) des Servozylinders empfängt und ein Sollwertsignal (V'x) abgibt, das die theoretische Verschiebung der Kolbenstange darstellt, die der befohlenen Verschiebung und den Kenndaten des verwendeten Servozylinders entspricht, mit einem Fehlerdetektor (DE), der das Sollwertsignal sowie ein Signal (Vx) empfängt, das die tatsächliche Verschiebung der Kolbenstange darstellt, und ein Alarmsignal (AL) liefert, wenn die Differenz zwischen den beiden empfangenen Signalen nicht zwischen zulässigen Grenzen liegt, wobei die Simulierschaltung mehrere Elemente (S1, A1, I) enthält, die durch Operationsverstärker gebildet sind, deren Übertragungsfunktionen analog sind zu derjenigen des Subtrahierers (S), der Bestandteil der Stellungsregelschleife des Zylinders ist, des Verstärkers (A), der hinter diesem Subtrahierer angeordnet ist, bzw. des Arbeitszylinders (V) dessen Position nachgeregelt wird, wobei die Übertragungsfunktion dieses Arbeitszylinders an eine Übertragungsfunktion erster Ordnung angeglichen ist, mit zwei Druckfühlern (CP1, CP2), welche die Drücke der beiden Kammern des Zylinders messen und zwei Differenzverstärkern (AD1, AD2) zugeordnet sind, welche mit einer Schaltung (S4) verbunden sind, die ein Signal (Vp) liefert, das proportional zu der von dem Arbeitszylinder gelieferten Kraft ist, dadurch gekennzeichnet, daß die Simulierschaltung eine Begrenzungsschaltung (L) enthält, die zwischen den Operationsverstärkern angeordnet ist, deren Übertragungsfunktionen analog denjenigen des Subtrahierers und des Arbeitszylinders sind, wobei diese Begrenzungsschaltung verbunden ist mit der Schaltung (S4), die ein zu der durch den Arbeitszylinder gelieferten Kraft proportionales Signal abgibt, und wobei diese Begrenzungsschaltung auf diese Weise die Geschwindigkeitssättigung des Servozylinders in Abhängigkeit von der von diesem gelieferten Kraft simuliert.

2. Vorrichtung nach Anspruch 1, dadurch gekennzeichnet, daß die Begrenzungsschaltung eine Diodenbrücke (D1 bis D4) enthält, die an zwei einander gegenüberliegenden Anschlüssen durch Spannungen gespeist ist, die von Spannungsgeneratoren (G3, G4) geliefert werden, welche an die Schaltung (S4) angeschlossen sind, die das zu der von dem Arbeitszylinder abgegebenen Kraft proportionale Signal liefert.

3. Vorrichtung nach Anspruch 2, dadurch gekennzeichnet, daß jeder der Generatoren aus einem Operationsverstärker gebildet ist, der eine Spannung abgibt, welche sich gemäß einem linearen Gesetz verändert, das durch Approximierung im Betriebsbereich des Servozylinders das Geschwindigkeitssättigungsgesetz dieses Servozylinders darstellt.

**Claims**

1. Electronic device for monitoring a plurality of hydraulic servo-cylinders which are independent of each other, comprising, for each servo-cylinder, a simulation circuit (CS1) receiving the control signal (Vc) of the servo-cylinder and supplying a setpoint signal (V'x) representing the theoretical displacement of the piston rod corresponding to the controlled displacement and to the characteristics of the servo-cylinder used, an error detector (DE) receiving the setpoint signal as well as a signal (Vx) representing the actual displacement of the piston rod and supplying an alarm signal (AL) when the difference between the two signals received is not comprised between admissible limits, the simulation circuit comprising a plurality of members (S1, A1, I) formed by operational amplifiers having transfer functions being respectively analogous of those of the subtractor (S) which is part of the position control loop of the cylinder, of the amplifier (A) following this subtractor and of the cylinder (V) the position of which is being controlled, the transfer function of this cylinder being equivalent to a first order transfer function, two pressure probes (CP1, CP2) measuring the pressures within the two chambers of the cylinder and being associated with two differential amplifiers (AD1, AD2) connected to a circuit S4) providing a signal (Vp) which is proportional to the load produced by the cylinder, characterized by the fact that the simulation circuit comprises a limiting circuit (L) placed between said operational amplifier having transfer functions which are analogous of those of the subtractor and of the cylinder, the limiting circuit being connected to said circuit (S4) supplying a signal which is proportional to the load produced by the cylinder, and this limiting circuit thus simulating the speed saturation of the servo-cylinder in dependence on the load produced thereby.

2. Device in accordance with claim 1, characterized by the fact that the limiting circuit comprises a diode bridge (D1 to D4) two opposed terminals of which are fed by voltages supplied by voltage generators (G3, G4) connected to said circuit (S4) supplying a signal proportional to the load produced by the cylinder.

3. Device in accordance with claim 2, characterized by the fact that each of the generators is formed by an operational amplifier supplying a voltage varying in accordance with a linear law representing the speed saturation law of the servo-cylinder by approximation within the operating range of this servo-cylinder.

**0012064**

Fig.1

Vc → S1 → A1 → V'e → I → V'x

CS

Fig.2

---

Vx

V'x → S2 → d1 → F → d2 → C → AL

G1
+ L

−
ℓ
G2

DE

Fig.3

---

Fig.4

CS1

Vp

Vc → S1 → A1 → V'e → L → V's → I → V'x

Fig.5

Fig.6

Fig.7